# EUROPÄISCHE PATENTSCHRIFT

(11) **EP 2 849 898 B1**
(45) Veröffentlichungstag und Bekanntmachung des Hinweises auf die Patenterteilung: **29.06.2016**
(21) Anmeldenummer: 13726451.1
(22) Anmeldetag: 22.05.2013
(51) Int. Cl.: B21B 37/72

(54) **VERFAHREN ZUM BETRIEB EINES STECKELWALZWERKS**
METHOD FOR OPERATING A STECKEL MILL
PROCÉDÉ DESTINÉ AU FONCTIONNEMENT D'UN LAMINOIR STECKEL

(30) Priorität: 29.06.2012 EP 12174352
(43) Veröffentlichungstag der Anmeldung: 25.03.2015
(73) Patentinhaber: Primetals Technologies Germany GmbH, 91052 Erlangen (DE)
(72) Erfinder: KURZ, Matthias, 91052 Erlangen (DE); SCHMIDT, Birger, 09618 Brand-Erbisdorf (DE); KRAUTWURST, Dirk, 91054 Erlangen (DE)
(74) Vertreter: Metals@Linz
(86) Internationale Anmeldenummer: PCT/EP2013/060441
(87) Internationale Veröffentlichungsnummer: WO 2014/000979

(56) Entgegenhaltungen:
- DE-A1- 19 514 475
- JP-A- 59 191 502
- KRAMER S ET AL: "TECHNOLOGY AND PERFORMANCE OF MODERN STECKEL MILLS", AISE STEEL TECHNOLOGY, AISE, PITTSBURG, PA, US, Bd. 74, Nr. 7, 1. Juli 1997 (1997-07-01), Seiten 17-26, XP000702120, ISSN: 0021-1559

## Beschreibung

Die Erfindung betrifft ein Verfahren zum Betrieb eines Steckelwalzwerks mit mindestens einem Reversiergerüst zum Walzen eines Walzguts sowie einlauf- und auslaufseitig zum Reversiergerüst angeordneten Wickelöfen für das Walzgut. Die Erfindung betrifft weiterhin eine Steuer- und/oder Regeleinrichtung zur Durchführung des Verfahrens, ein Steckelwalzwerk mit einer derartigen Steuer- und/oder Regeleinrichtung, einen maschinenlesbaren Programmcode sowie ein Speichermedium.

Bei einem Steckelwalzwerk wird ein Walzgut, insbesondere ein Band, aus einem einlaufseitigen Wickelofen ausgefädelt und durch einen einlaufseitigen Treiber in ein Reversiergerüst zum Anstich eingeführt. Nach dem ersten Walzstich wird das Walzgut in einen auslaufseitigen Wickelofen eingefädelt. Während eines derartigen, mehrmals wiederholten Reversiervorgangs wird sowohl ein Kopfende als auch ein Fußende des Bandes gegenüber dem mittleren Bereich des Bandes stärker abgekühlt. Die stärkere Abkühlung ergibt sich dadurch, dass diese Bandbereiche während des Reversiervorgangs alternierend nicht im Wickelofen auf hoher Temperatur gehalten werden.

Durch das kalte Kopfende und das kalte Fußende des Walzguts bzw. Bandes steigt dort die Walzkraft während des Walzstichs gegenüber dem Mittelbereich des Bandes stark an. Das Reversiergerüst muss daher für die hier auftretenden hohen Walzkräfte ausgelegt werden. Aufgrund extremer Walzkraftspitzen am Kopf- und Fußende des Walzguts können sich Dicken- und/oder Planheitsänderungen über die Walzbandlänge ergeben. Das Walzgut hat damit eine mindere Qualität. Wenn es zu einer Störung kommt, bedingt durch ein zu starkes Abkühlen des Walzguts, wird üblicherweise das gesamte Material als Schrott aufgewickelt.

Gemäß DE 19514475 wird diesem Problem entgegengewirkt, indem zwischen dem Reversiergerüst und den Wickelöfen Heizvorrichtungen vorgesehen sind, so dass vor allem der außerhalb der geheizten Wickelöfen befindliche Teil des Walzguts auf eine, dem übrigen Walzgut entsprechend angepasste Temperatur gebracht werden kann. Diese Lösung ist jedoch durch einen sehr hohen Energieverbrauch gekennzeichnet, außerdem ist ausreichend Platz für die Heizvorrichtungen erforderlich.

Aus der DE 195 14 475 ist ein Steckel-Walzwerk mit einem Reversiergerüst und Wickelöfen bekannt, wobei zwischen einem der Wickelöfen und dem Reversiergerüst eine Heizvorrichtung vorgesehen, sodass Bandabschnitte erwärmt werden können. Der Erfindung liegt die Aufgabe zugrunde, ein Steckelwalzwerk derart zu steuern oder zu regeln, dass nach einer Störung und einem oder mehreren anschließenden Walzvorgängen die Qualität eines möglichst großen Teils des Walzguts möglichst hoch bleibt.

Die Aufgabe wird erfindungsgemäß durch ein Verfahren mit den Merkmalen gemäß Anspruch 1 gelöst.

Beim oben beschriebenen Verfahren wird ein kaltes, nicht walzbares Stück des Walzguts beim Walzvorgang berücksichtigt und die Steuerung bzw. Regelung des Reversiergerüsts wird entsprechend angepasst, so dass Störfälle vermieden und der verwendbare Teil des Walzguts maximal groß ist. Im Gegensatz zum Stand der Technik zielt das Verfahren nicht auf eine Eliminierung des kalten Stücks im Bereich des Kopf- bzw. Fußendes des Walzguts ab, sondern auf eine Minimierung der Länge sowie des Einflusses dieses kalten Stücks beim Walzvorgang. Das Verfahren basiert dabei auf der Überlegung, dass das kalte Stück automatisch erkannt werden kann und die Regelung des Reversiergerüsts entsprechend automatisch angepasst werden kann.

Hierfür wird insbesondere im Bereich des Kopfendes des Walzguts, insbesondere beim Einfädeln des Walzguts ins Reversiergerüst, zum Beginn des Walzvorgangs auf eine gewöhnliche Regelung auf eine Zieldicke des Walzguts verzichtet. Das Reversiergerüst wird im ersten Schritt derart gesteuert oder geregelt, dass eine elastische Verformung und/oder eine plastische Umformung des Materials stattfindet, die zu einem Walzkraftniveau führt, welches ein sicheres Führen des Materials im Walzspalt bei gleichzeitiger Erreichung einer akzeptablen Planheit des Walzguts leistet.

Während der Durchführung von Schritt 1. wird mindestens eine Messgröße gemessen, die mit einer aktuellen Dicke und/oder einer Härte des Walzguts korreliert ist. Die Messgröße kann auch die aktuelle Dicke oder Härte des Walzguts selbst sein. Es erfolgt somit eine direkte und/oder indirekte Bestimmung der Dicke oder Härte des Walzguts. Weitere Größen, die mit der Dicke oder Härte korreliert sind, sind z.B. eine Walzkraft bzw. eine Anstellung des Walzspalts. Dabei gilt, dass je wärmer der gewalzte Abschnitt ist, desto weicher das Material ist bzw. desto größer die Abnahme der Dicke beim Walzen ist. Beispielsweise wird bei der Bestimmung der Dicke und/oder Härte die Anstellung des Walzspalts herangezogen, denn aufgrund einer im Walzvorgang veränderlichen Dicke oder Härte kann sich der Walzspalt ändern.

Die ermittelte Dicke oder Härte oder die Walzspaltanstellung wird mit einem vorgegebenen Sollwert verglichen. Wenn die ermittelte Messgröße den Sollwert erreicht oder diesen unterschreitet, wird automatisch auf die beim Warmwalzen von metallischen Walzgütern übliche Regelung zur Materialabnahme umgeschaltet und der noch warme Teil des Walzguts kann ungestört auf die Zieldicke gewalzt werden. Der Fachmann kennt dabei verschiedene Verfahren, die sich zum Erreichen einer Zieldicke eignen, z.B.
- einen Automatic Gauge Control (AGC)-Algorithmus mit oder ohne Dickenüberwachung (Dickenmonitor) beim Walzen;
- eine (Multi-)Setpoint-Regelung, bei der aus der Härte des Materials eine Kraft berechnet wird, die nötig ist, um die Zieldicke zu erreichen und entsprechen die Walzspaltanstellung vorgenommen wird;
- oder eine feed-forward (AGC)-Regelung mit oder ohne Dickenüberwachung, bei der im AGC-Algorithmus Informationen über Dickenabweichungen an bereits gewalzten Stellen des Walzguts berücksichtigt werden.

Dadurch, dass im Bereich des kalten Stücks beim Führen des Walzguts durch den Walzspalt zunächst die Zieldicke des Bandes außer Acht gelassen wird und erst anschließend die Regelung auf Zieldicke eingestellt wird, werden in der Regel das Kopfende und das Fußende des Walzguts auf eine größere Dicke als die Zieldicke gewalzt (geringere Dickenabnahme). Diese Bereiche bleiben jedoch plan und der Walzvorgang wird nicht gestört. Die dickeren Enden des Walzguts können dabei nach Abschluss des Walzvorgangs abgeschnitten werden, so dass lediglich der Teil, der die gewünschte Zieldicke aufweist, verkauft wird. Das entfernte Material an den Enden des Walzguts bildet einen sehr geringen Anteil im Vergleich zur Gesamtlänge des Walzguts, so dass der größte Teil des Walzguts qualitativ hochwertig gewalzt wird.

Vorzugsweise wird beim Schritt 1. das Reversiergerüst auf eine Kraftregelung mit einem vorgegebenen Kraftverlauf eingestellt. Unter Kraftverlauf wird hierbei auch ein konstanter Kraftverlauf verstanden, d.h. es kann lediglich eine konstante Kraft vorgegeben sein. Der Kraftverlauf kann alternativ einer vorgegebenen, sich über die Zeit verändernden Kraft folgen. Zweckdienlicherweise umfasst der vorgegebene Kraftverlauf eine konstante Kraft, die zwischen 5 MN und 100 MN, insbesondere zwischen 5 MN und 60 MN, beträgt. Die Kraft ist dabei derart ausgewählt, dass sie einerseits eine eindeutige Detektierung des Materials im Walzspalt des Reversiergerüsts zulässt, dass auf der anderen Seite jedoch eine Überlastung des Reversiergerüsts vermieden wird. Nachdem das Material im Walzspalt detektiert ist, wird die Anstellung über die Kraftregelung derart gesteuert, dass das Reversiergerüst z.B. immer mit der gleichen Kraft belastet ist (Verfahren zur Kraftregelung mit vorgegebener Kraft sind dem Fachmann bekannt).

Alternativ wird beim Schritt 1. das Reversiergerüst auf eine Kraftregelung eingestellt, bei der eine Sollkraft für das Reversiergerüst anhand der mindestens einen ermittelten Messgröße bestimmt wird. Dies bedeutet, dass während der Durchführung vom Schritt 1. das Reversiergerüst auf Kraft geregelt wird und dass die ermittelte Messgröße, die direkt oder indirekt auf die Dicke des Walzguts oder auf seine Härte zurückführt, beim kraftgeregelten Betrieb des Reversiergerüsts herangezogen wird. Der Kraftverlauf ist hierbei nicht vorab festgelegt und vorgegeben, sondern es erfolgt insbesondere eine kontinuierliche Anpassung der Kraft in Echtzeit in Abhängigkeit von den lokalen Eigenschaften des Abschnitts des Walzguts, das sich gerade im Walzspalt befindet. Beispielsweise kann diese Regelung des Reversiergerüsts wie eine um die Arbeitswalzen des Reversiergerüsts gespannte Feder oder ein Gummiband wirken - wenn auf die Arbeitswalzen eine erhöhte Kraft wirkt, z.B. weil an dieser Stelle das Material des Walzguts härter ist, würde sich der Walzspalt weiter öffnen, hierbei erhöht sich jedoch automatisch die Kraft, die die Arbeitswalzen zusammendrückt und somit die Anstellung wieder schließt.

Gemäß einer bevorzugten Ausführungsvariante wird eine erwartete Minimallänge eines kalten Stücks des Walzguts vorgegeben und beim Walzen eines Abschnittes des Walzguts im Bereich der Minimallänge wird lediglich Schritt 1. durchgeführt. Dies bedeutet, dass solange im Bereich der erwarteten Minimallänge gewalzt wird, noch keine Bestimmung der aktuellen Dicke des gewalzten Abschnitts erfolgt, sondern das Reversiergerüst wird insbesondere lediglich auf eine Kraft geregelt. Auf diese Weise erfolgt ein schneller und sicherer Betrieb des Steckelwalzwerks, da im Bereich der Minimallänge des kalten Stücks ein Umschalten von der Kraftregelung auf die Dickenregelung kontraproduktiv und daher nicht vorgesehen ist. Somit ist es auch nicht notwendig in diesem Stadium des Walzvorgangs die aktuelle Dicke des gewalzten Abschnitts zu bestimmen. Nach Durchlauf des Bereichs der Minimallänge wird mindestens Schritt 2. durchgeführt, gegebenenfalls auch Schritt 3., wenn der Sollwert erreicht wird.

Gemäß einer weiteren bevorzugten Ausführungsvariante wird eine erwartete Maximallänge des kalten Stücks des Walzguts vorgegeben, wobei zwischen der Minimallänge und der Maximallänge ein Übergangsbereich vorliegt, und wobei erst beim Walzen des Abschnitts des Walzguts im Übergangsbereich Schritt 2. und Schritt 3. durchgeführt werden. Somit wird gewährleistet, dass das Umstellen auf die Dickenregelung so früh wie möglich erfolgt.

Da die tatsächliche Länge des kalten Stücks nicht bekannt ist, werden sowohl die Minimal- als auch die Maximallänge aufgrund der Materialgeometrie (Länge, Dicke des Walzguts) und der Abstände der Wickelöfen zum Reversiergerüst abgeschätzt. Es kann vorkommen, dass auch nach dem Durchlauf der erwarteten Maximallänge für das kalte Stück der Sollwert für die Messgröße immer noch nicht erreicht ist. In diesem Fall wird vorteilhafterweise automatisch auf eine Regelung auf die Zieldicke umgeschaltet. Auch wenn der Sollwert nicht erreicht ist, wird sich nach der erwarteten Maximallänge des kalten Stücks die Messgröße dem Sollwert angenähert haben, so dass eine Beschädigung des Reversiergerüsts bei der Verstellung des Walzspalts für die übliche Dickenregelung unwahrscheinlich ist.

Vorzugsweise wird die Dicke des gewalzten Abschnitts des Walzguts beim Schritt 2. über die gemessene Walzkraft und über eine gemessene Anstellung des Walzspaltes des Reversiergerüsts berechnet. Die Dicke des Walzguts wird dabei nicht direkt gemessen, sondern es wird die sogenannte Gaugemeter-Dicke über die eingestellte Walzkraft und die vorab messbaren Gerüststeifigkeiten berechnet.

Wenn beim Walzen das kalte Fußende in das Reversiergerüst eingeführt wird, wird ähnlich vorgegangen. Nach einer bevorzugten Variante wird zum Walzen des kalten Stücks am Fußende des Walzguts das Reversiergerüst von der Regelung auf die Zieldicke auf eine Regelung, bei der die Zieldicke außer Acht gelassen wird, umgeschaltet. Insbesondere wird während des Walzens eine Ist-Walzkraft mit einer Sollkraft verglichen und wenn die Ist-Kraft die Soll-Kraft überschreitet (d.h. wenn das kalte Stück erreicht ist), schaltet eine dem Reversiergerüst zugeordnete Steuer- und/oder Regeleinrichtung insbesondere auf Kraftregelung um. Auf diese Weise wird bis zum Ausfädeln Kontakt zu dem Material des Walzguts gehalten. Alternativ oder ergänzend werden eine Minimallänge und eine Maximallänge für das kalte Stück vorgegeben.

Die Kraft bzw. der Kraftverlauf für die Kraftregelung sowie die erwartete Länge des kalten Stücks können die gleichen wie beim Einfädeln sein. Alternativ können sie auch neu bestimmt werden.

Die Länge des kalten Stücks kann insbesondere der erwarteten Maximallänge des kalten Stücks beim Einfädeln im Stich zuvor oder im Walzgang zuvor entsprechen. Die Länge des kalten Stücks ist dabei insbesondere mindestens so lang wie die Minimallänge beim Einfädeln. Zweckdienlicherweise wird von einem Prozessrechner berücksichtigt, am Kopfende beim Einfädeln bei welcher Länge das Umschalten auf die Zieldickenregelung erfolgt ist. Durch diese Länge wird dann das kalte Stück im Bereich des Fußendes des Walzguts definiert.

Bevorzugt ist die Minimallänge zwischen 0 m und 5 m. Die Minimallänge beträgt 0 m z.B. am Anfang des Walzvorgangs, wenn die Enden des Walzguts noch nicht abgekühlt sind. In diesem Fall ist der jeweilige Abstich zum Beginn insbesondere kraftgeregelt, jedoch wird gleich im Übergangsbereich des Walzguts gearbeitet und die Dicke des gewalzten Abschnitts wird von Beginn an ermittelt und mit dem Sollwert im Hinblick auf eine möglichst frühe Umschaltung auf die Zieldickenregelung verglichen. Falls das Material schon einmal angestochen hätte und wieder aus dem Walzspalt zurückgezogen wurde, könnte das Material am Kopfende bereits schon die Zieldicke erreicht haben, danach kommt dickeres Material, das auch kalt sein kann. Um in diesem Fall ein zu frühes Umschalten der Regelung zu unterdrücken, wird die Minimallänge derart vorgegeben, dass sie das kritische, kalte Stück umschließt, insbesondere beträgt in diesem Fall die Minimallänge bis 5 m. In allen anderen Fällen würde man die Minimallänge kleiner definieren, insbesondere bis 1 m, um Probleme beim Einfädeln zu unterdrücken.

Vorzugsweise beträgt die Maximallänge etwa 10 m. Die Maximallänge entspricht vorteilhafterweise dem Abstand zwischen dem Reversiergerüst und einem der Wickelöfen.

Gemäß einer weiteren bevorzugten Variante werden Schritte 1. bis 3. erst nach einer Störung des Walzvorgangs während einer Regelung des Reversiergerüsts auf Zieldicke eingeleitet. Das Material könnte schon einmal angestochen worden sein, ist aber bei der Störung wieder aus dem Walzspalt zurückgezogen worden. Insbesondere ermittelt die Steuer- und/oder Regeleinrichtung dabei die Dimensionen des bereits gewalzten Materials zum Zeitpunkt der Störung. Wird im Verlauf der Behebung der Störung Material entfernt, sind die Eingaben an das Reversiergerüst bezüglich der Länge des Walzguts zu korrigieren.

Die Aufgabe wird weiterhin erfindungsgemäß gelöst durch eine Steuer- und/oder Regeleinrichtung für ein Steckelwalzwerk, mit einem maschinenlesbaren Programmcode, welcher Steuerbefehle aufweist, die bei Ausführung des Programmcodes die Steuer- und/oder Regeleinrichtung zur Durchführung eines Verfahrens nach einer der oben beschriebenen Ausführungen veranlassen.

Die Aufgabe wird weiterhin erfindungsgemäß gelöst durch ein Steckelwalzwerk mit mindestens einem Reversiergerüst zum Walzen eines Walzguts sowie einlauf- und auslaufseitig zum Reversiergerüst angeordneten Wickelöfen für das Walzgut sowie mit einer derartigen Steuer- und/oder Regeleinrichtung.

Die Aufgabe wird weiterhin erfindungsgemäß gelöst durch einen maschinenlesbaren Programmcode für eine Steuer- und/oder Regeleinrichtung für ein Steckelwalzwerk, wobei der Programmcode Steuerbefehle aufweist, die die Steuer- und/oder Regeleinrichtung zur Durchführung des Verfahrens nach einer der oben beschriebenen Ausführungen veranlassen.

Die Aufgabe wird weiterhin erfindungsgemäß gelöst durch ein Speichermedium mit einem darauf gespeicherten derartigen maschinenlesbaren Programmcode.

Zusammengefasst wird beim Walzen mittels des Steckelwalzwerks das kalte, nicht walzbare Stück des Walzguts berücksichtigt und das Steckelwalzwerk wird im Bereich des kalten Stücks und außerhalb dieses Bereichs unterschiedlich angesteuert. Dadurch sind auch andere Elemente der Automatisierung, die sich auf das Walzkraftsignal abstützen, z.B. die Materialverfolgung, sicher im Automatikbetrieb zu betreiben. Im Bereich des kalten Stücks wird das Material des Walzguts im Walzspalt geführt, insbesondere ohne dass notwendigerweise eine Dickenabnahme stattfindet. Außerhalb des kalten Stücks wird die übliche Regelung Reversiergerüsts zur Dickenabnahme eingestellt, um die Zieldicke zu erreichen.

Ein Ausführungsbeispiel der Erfindung wird anhand einer Zeichnung näher erläutert. Hierin zeigen:
- FIG 1: schematisch ein Steckelwalzwerk zum Walzen eines Metallbands, und
- FIG 2: in einem Blockschema den Ablauf des Betriebsverfahrens für ein solches Steckelwalzwerk.

Gleiche Bezugszeichen haben in den verschiedenen Figuren die gleiche Bedeutung.

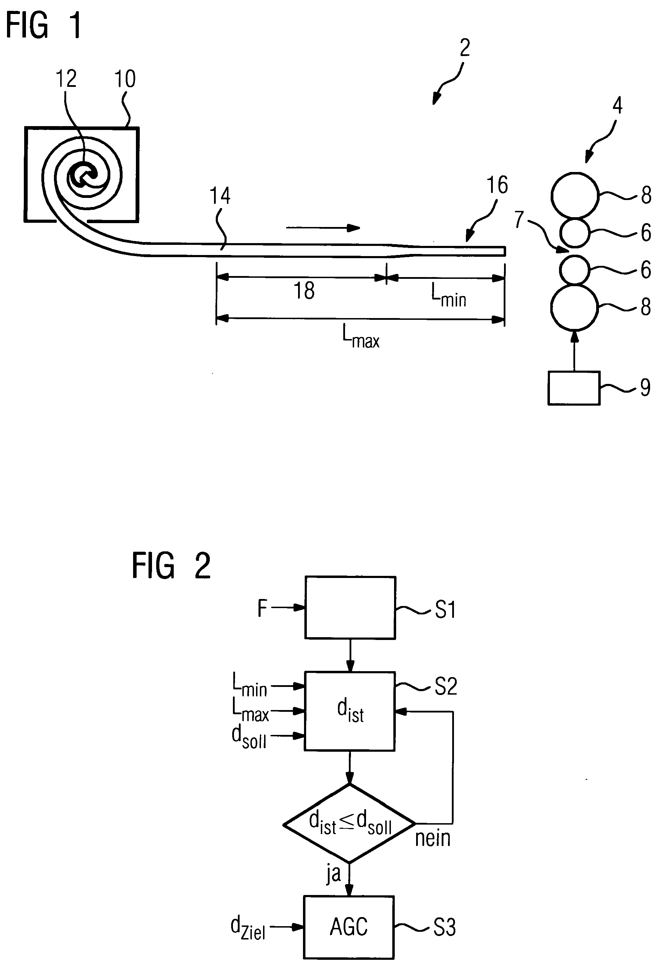

Das in FIG 1 dargestellte Steckelwalzwerk 2 umfasst ein Reversiergerüst 4 mit zwei Arbeitswalzen 6, zwischen denen ein Walzspalt 7 ausgebildet ist, und mit zwei Stützwalzen 8, sowie einlaufseitig- und auslaufseitig zum Reversiergerüst 2 angeordnete Wickelöfen, von denen jedoch in FIG 1 lediglich der einlaufseitige Wickelofen 10 gezeigt ist. Das Steckelwalzwerk 2, insbesondere das Reversiergerüst 4 wird von einer Steuer- und/oder Regeleinrichtung 9 angesteuert, die in FIG 1 symbolisch gezeigt ist.

Im Wickelofen 10 ist ein zu walzendes Walzgut 14, im gezeigten Ausführungsbeispiel ein Metallband, auf einer Steckeltrommel 12 aufgewickelt. Im Wickelofen 10 wird das Walzband 14 heiß gehalten, so dass es mittels des Reversiergerüsts 4 auf eine Zieldicke d_{ziel} gewalzt werden kann.

Ein allgemeines Problem bei einem solchen Steckelwalzwerk 2 ist, dass schon nach kurzen Verzögerungen das Material außerhalb der Wickelöfen 10 so kalt ist, das es auf Zieldicke d_{ziel} nicht mehr fertig gewalzt werden kann. Um dieses Problem zu lösen, ist das in FIG 2 schematisch gezeigte Betriebsverfahren für das Steckelwalzwerk 2 vorgesehen.

Gemäß dem in FIG 2 beschriebenen Betriebsverfahren wird in einem ersten Schritt S1 im Bereich eines kalten Kopfendes 16 des Bandes 14 das Reversiergerüst 4 zunächst derart geregelt, dass Kontakt zwischen der Arbeitswalze 6 und dem Metallband 4 besteht, jedoch keine wesentliche Dickenabnahme erfolgt. Insbesondere ist hierfür eine konstante Walzkraft vorgegeben, die derart gewählt ist, dass eine Detektion des Walzbandes 14 im Walzspalt 7 zwischen den Arbeitswalzen 6 möglich ist, jedoch darf die Kraft F nicht zu groß sein, so dass das Reversiergerüst 2 durch das kalte und somit härtere Stück im Bereich des Kopfendes 16 des Walzbands 14 beschädigt wird.

In einem zweiten Schritt S2 wird während des kraftgeregelten Walzvorgangs eine aktuelle Ist-Dicke dᵢₛₜ des gewalzten Abschnitts des Walzbandes 14 ermittelt. Hierfür werden im gezeigten Ausführungsbeispiel eine Minimallänge Lₘᵢₙ sowie eine Maximallänge Lₘₐₓ des kalten Stückes des Walzbands 14 vorgegeben. Die Minimallänge Lₘᵢₙ variiert insbesondere zwischen 0 und 5 m, im gezeigten Ausführungsbeispiel beträgt sie 1 m. Die Maximallänge Lₘₐₓ entspricht beispielsweise dem Abstand zwischen dem Reversiergerüst 2 und dem einlaufseitigen Wickelofen 10 unter Berücksichtigung eines Sicherheitsaufschlags. Die Maximallänge Lₘₐₓ ist beispielsweise 10 m.

Beim Walzen des Abschnitts des Bands 14 im Bereich der Minimallänge Lₘᵢₙ wird das Reversiergerüst 4 im gezeigten Ausführungsbeispiel lediglich auf Kraft geregelt.

Erst nach Durchlauf des Bereichs der Minimallänge Lₘᵢₙ ist zu erwarten, dass das Walzband 14 warm genug ist, um auf die Zieldicke d_{ziel} gewalzt zu werden. Es ist jedoch nicht bekannt, wo das kalte Stück am Kopfende 16 des Walzbandes 14 aufhört. Aus diesem Grund wird in einem Übergangsbereich 18 nach der Minimallänge Lₘᵢₙ, jedoch innerhalb der Maximallänge Lₘₐₓ, beim Walzen des Metallbandes 14 insbesondere kontinuierlich die aktuelle Dicke dᵢₛₜ ermittelt und mit einer vorgegebenen Solldicke dₛₒₗₗ verglichen. Die Ermittlung der aktuellen Dicke dᵢₛₜ erfolgt insbesondere über die Walzkraft F und die Größe des Walzspaltes 7 zwischen den Arbeitswalzen 6. Die aktuelle Dicke $dᵢₛₜ wird somit indirekt bestimmt. Alternativ kann sie auch direkt gemessen werden. Anstelle der aktuellen Dicke dᵢₛₜ kann auch die Härte des Bands 14 direkt oder indirekt ermittelt werden. Geeignete Messgrößen für die Ermittlung der aktuellen Dicke dᵢₛₜ oder der Härte sind beispielsweise die Walzkraft F und eine Anstellung des Walzspalts 7.

Wenn die ermittelte Dicke dᵢₛₜ kleiner oder gleich einer Solldicke dₛₒₗₗ ist, wird gemäß Schritt S3 das Betriebsverfahren eingeleitet, bei dem von der Kraftregelung auf eine Dickenregelung des Reversiergerüsts 4 umgeschaltet wird. Dabei wird der Walzspalt 7 derart eingestellt, dass das Walzband 14 auf die vorgegebene Zieldicke d_{ziel} gewalzt wird.

Eine Kraftregelung gemäß Schritt S1 kann bereits beim ersten Anstich eingestellt werden. Alternativ wird das in FIG 2 beschriebene Verfahren erst eingeleitet, wenn nach einigen Walzstichen die Enden des Walzbandes 14 bereits abgekühlt sind oder wenn es zu einer Störung beim Reversieren gekommen ist.

Wenn das Fußende des Bandes 14 das Reversiergerüst 4 erreicht hat, wird ähnlich vorgegangen wie im Bereich des Kopfendes 16. Dabei wird eine Ist-Walzkraft mit einer Sollkraft verglichen, und, wenn die Ist-Walzkraft die Sollkraft überschreitet, d.h. wenn das Fußende zu kalt ist, um auf die gewünschte Zieldicke d_{ziel} gewalzt zu werden, wird wieder auf die Kraftregelung gemäß Schritt S1 umgeschaltet. Ähnlich wie beim Kopfende 16 können im Bereich des Fußendes eine Minimallänge Lₘᵢₙ, eine Maximallänge Lₘₐₓ und ein Übergangsbereich 18 für das kalte Stück vorgesehen sein.

Alternativ zum Vergleich der ermittelten aktuelle Dicke dᵢₛₜ mit dem Sollwert dₛₒₗₗ, kann eine Dickenabweichung bzw. Dickendifferenz, die erfasst wird, wenn der warme Teil des Walzguts 14 in den Walzspalt 7 gelangt, mit einem vorgegebenen Sollwert verglichen werden und beim Überschreiten dieses Sollwerts, d.h. wenn die Dickenabweichung zu groß ist, wird von der Kraftregelung auf die "normale" Walzspaltkontrolle umgeschaltet.

Dem oben beschriebenen Verfahren zum Betrieb des Steckelwalzwerks 2 liegt eine automatische Erkennung des Übergangs vom nicht-walzbaren zum walzbaren Materialabschnitt zugrunde. Wenn bei der Kraftregelung, bei der die Zieldicke d_{ziel} außer Acht gelassen wird, die aktuelle Dicke dᵢₛₜ des Walzguts 14 die vorgegebene Solldicke dₛₒₗₗ unterschreitet, wird auf den normalen, dickengeregelten Walzbetrieb (z.B. AGC) umgeschaltet. Das Verfahren eignet sich dabei auch zum automatischen Tapern für das Erreichen von dünnen Abmessungen. Hierbei werden das Kopf- und Fußende so kalt, dass sie mitunter nicht mehr auf Zieldicke gewalzt werden können, wobei jedoch die Kopf- und Fußlängen und -dicken so eingestellt sind, dass ein möglichst großer Teil des Walzguts 14 in einem störungsfreien Betrieb des Steckelwalzwerks 2 optimal ausgenutzt wird.

## Patentansprüche

1. Verfahren zum Betrieb eines Steckelwalzwerks (2) mit mindestens einem Reversiergerüst (4) zum Walzen eines Walzguts (14) sowie einlauf- und auslaufseitig zum Reversiergerüst (4) angeordneten Wickelöfen (10) für das Walzgut (14), **dadurch gekennzeichnet, dass**
- in einem Schritt 1 (S1) beim Walzen des Walzguts (14) im Bereich eines Kopfendes des Walzguts (14) eine Zieldicke d_{ziel} des Walzguts (14) außer Acht gelassen wird, wobei auf eine Kraftregelung mit einem vorgegebenen Kraftverlauf eingestellt wird, und
- in einem Schritt 2 (S2) während der Durchführung von Schritt 1. mindestens eine Messgröße, die mit einer aktuellen Dicke dᵢₛₜ und/oder einer Härte des Walzguts (14) korreliert ist, ermittelt und mit einem Sollwert verglichen wird, und
- in einem Schritt 3 (S3) wenn die ermittelte Messgröße den Sollwert erreicht oder unterschreitet, das Reversiergerüst im Hinblick auf ein Erreichen der Zieldicke d_{ziel} des Walzguts (14) betrieben wird, wobei, wenn die ermittelte Dicke dᵢₛₜ kleiner oder gleich einer Solldicke dₛₒₗₗ ist, von der Kraftregelung auf eine Dickenregelung des Reversiergerüsts 4 umgeschaltet wird.

2. Verfahren nach Anspruch 1,
**dadurch gekennzeichnet, dass** der vorgegebene Kraftverlauf eine konstante Kraft F umfasst, die zwischen 5 MN und 100 MN, insbesondere zwischen 5 MN und 60 MN beträgt.

3. Verfahren nach Anspruch 1,
**dadurch gekennzeichnet, dass** beim Schritt 1. das Reversiergerüst auf eine Kraftregelung eingestellt wird, bei der eine Sollkraft für das Reversiergerüst (4) aus der mindestens einen ermittelten Messgröße bestimmt wird.

4. Verfahren nach einem der vorhergehenden Ansprüche,
**dadurch gekennzeichnet, dass** eine erwartete Minimallänge Lₘᵢₙ eines kalten Stücks des Walzguts (14) vorgegeben wird und beim Walzen eines Abschnitts des Walzguts (14) im Bereich der Minimallänge Lₘᵢₙ lediglich Schritt 1. durchgeführt wird.

5. Verfahren nach einem der vorhergehenden Ansprüche,
**dadurch gekennzeichnet, dass** eine erwartete Maximallänge Lₘₐₓ des kalten Stücks des Walzguts (14) vorgegeben wird, wobei zwischen der Minimallänge Lₘᵢₙ und der Maximallänge Lₘₐₓ ein Übergangsbereich (18) vorliegt, und wobei erst beim Walzen des Abschnitts des Walzguts (14) im Übergangsbereich (18) Schritt 2. und Schritt 3. durchgeführt werden.

6. Verfahren nach Anspruch 5,
**dadurch gekennzeichnet, dass** nach Durchlauf der Maximallänge Lₘₐₓ durch das Reversiergerüst (4) automatisch auf eine Regelung auf die Zieldicke d_{ziel} umgeschaltet wird.

7. Verfahren nach einem der vorhergehenden Ansprüche,
**dadurch gekennzeichnet, dass** die aktuelle Dicke dᵢₛₜ des gewalzten Abschnitts des Walzguts (14) über eine gemessene Walzkraft F und über eine gemessene Anstellung eines Walzspaltes (7) des Reversiergerüsts (4) berechnet wird.

8. Verfahren nach einem der vorhergehenden Ansprüche,
**dadurch gekennzeichnet, dass** zum Walzen eines kalten Stücks am Fußende des Walzguts (14) das Reversiergerüst (4) von der Regelung auf die Zieldicke d_{ziel} auf eine Regelung, bei der die Zieldicke d_{ziel} außer Acht gelassen wird, umgeschaltet wird.

9. Verfahren nach einem der Ansprüche 4 bis 8,
**dadurch gekennzeichnet, dass** die Minimallänge Lₘᵢₙ zwischen 0 m und 5 m ist.

10. Verfahren nach einem der Ansprüche 5 bis 9,
**dadurch gekennzeichnet, dass** die Maximallänge Lₘₐₓ etwa 10 m beträgt.

11. Verfahren nach einem der Ansprüche 5 bis 10,
**dadurch gekennzeichnet, dass** die Maximallänge Lₘₐₓ dem Abstand zwischen dem Reversiergerüst (4) und einem der Wickelöfen (10) entspricht.

12. Verfahren nach einem der vorhergehenden Ansprüche,
**dadurch gekennzeichnet, dass** Schritte 1. bis 3. bei einer Störung bei einem Walzvorgang während der Regelung des Reversiergerüsts (14) auf die Zieldicke d_{ziel} eingeleitet werden.

13. Steuer- und/oder Regeleinrichtung (9) für ein Steckelwalzwerk (2), mit einem maschinenlesbaren Programmcode, welcher Steuerbefehle aufweist, die bei Ausführung des Programmcodes die Steuer- und/oder Regeleinrichtung (9) zur Durchführung eines Verfahrens nach einem der Ansprüche 1 bis 12 veranlassen.

14. Steckelwalzwerk (2) mit mindestens einem Reversiergerüst (4) zum Walzen eines Walzguts (14) sowie einlauf- und auslaufseitig zum Reversiergerüst (4) angeordneten Wickelöfen (10) für das Walzgut (14) sowie mit einer Steuer- und/oder Regeleinrichtung (9) nach Anspruch 13.

15. Maschinenlesbarer Programmcode für eine Steuer- und/oder Regeleinrichtung (9) für ein Steckelwalzwerk (2), wobei der Programmcode Steuerbefehle aufweist, die die Steuer- und/oder Regeleinrichtung (9) zur Durchführung des Verfahrens nach einem der Ansprüche 1 bis 11 veranlassen.

16. Speichermedium mit einem darauf gespeicherten maschinenlesbaren Programmcode gemäß Anspruch 15.

## Claims

1. Method for operating a Steckel mill (2) having at least one reversing unit (4) for rolling a rolled product (14) and winding furnaces (10) for the rolled product (14) arranged on the entry side and the exit side with respect to the reversing unit (4), **characterised in that**:
- in a step 1. (S1): during rolling of the rolled product (14) in the region of a head end of the rolled product (14), a target thickness d_{target} of the rolled product (14) is ignored, wherein a force regulation with a pre-determined force pattern is set, and
- in a step 2. (S2): while step 1 is carried out, at least one measured variable which correlates to a current thickness d_{current} and/or a hardness of the rolled product (14) is determined and is compared with a reference value, and
- in a step 3. (S3): if the determined measured variable reaches or falls below the reference value, the reversing unit is operated with the aim of achieving the target thickness d_{target} of the rolled product (14), wherein, when the determined thickness d_{current} is less than or equal to a target thickness d_{target}, the force regulation is switched to a thickness regulation of the reversing unit (4).

2. Method according to claim 1,
**characterised in that** the pre-determined force pattern comprises a constant force F which lies between 5 MN and 100 MN, in particular, between 5 MN and 60 MN.

3. Method according to claim 1,
**characterised in that**, in step 1, the reversing unit is set to a force regulation in which a reference force is determined for the reversing unit (4) from the at least one determined measured variable.

4. Method according to one of the preceding claims,
**characterised in that** an expected minimum length Lₘᵢₙ of a cold section of the rolled product (14) is pre-determined and, during rolling of a section of the rolled product (14) in the region of the minimum length Lₘᵢₙ, only step 1 is carried out.

5. Method according to one of the preceding claims,
**characterised in that** an expected maximum length Lₘₐₓ of the cold section of the rolled product (14) is pre-determined, wherein a transition region (18) exists between the minimum length Lₘᵢₙ and the maximum length Lₘₐₓ, and wherein only during rolling of the section of the rolled product (14) in the transition region (18) are steps 2 and 3 carried out.

6. Method according to claim 5,
**characterised in that** after the passage of the maximum length Lₘₐₓ through the reversing unit (4), switching over to closed-loop control for the target thickness d_{target} takes place automatically.

7. Method according to one of the preceding claims,
**characterised in that** the current thickness d_{current} of the rolled section of the rolled product (14) is calculated by means of a measured rolling force F and by means of a measured setting of a roll gap (7) of the reversing unit (4).

8. Method according to one of the preceding claims,
**characterised in that**, for rolling of a cold section at the foot end of the rolled product (14), the reversing unit (4) is switched over from the closed-loop control for the target thickness d_{target} to a closed-loop control in which the target thickness d_{target} is ignored.

9. Method according to one of claims 4 to 8,
**characterised in that** the minimum length Lₘᵢₙ is between 0 m and 5 m.

10. Method according to one of claims 5 to 9,
**characterised in that** the maximum length Lₘₐₓ is approximately 10 m.

11. Method according to one of claims 5 to 10, **characterised in that** the maximum length Lₘₐₓ corresponds to the separation between the reversing unit (4) and one of the winding furnaces (10).

12. Method according to one of the preceding claims,
**characterised in that** steps 1 to 3 are initiated in the event of a fault in a rolling process during closed-loop control of the reversing unit (14) to the target thickness d_{target}.

13. Open-loop and/or closed-loop control device (9) for a Steckel mill (2) with a machine-readable program code which has control instructions which, on execution of the program code, cause the open-loop and/or closed-loop control device (9) to carry out a method according to one of claims 1 to 12.

14. Steckel mill (2) having at least one reversing unit (4) for rolling a rolled product (14) and winding furnaces (10) for the rolled product (14) arranged on the entry side and the exit side with respect to the reversing unit (4) and having an open-loop and/or closed-loop control device (9) according to claim 13.

15. Machine-readable program code for an open-loop and/or closed-loop control device (9) for a Steckel mill (2), wherein the program code has control instructions which cause the open-loop and/or closed-loop control device (9) to carry out the method according to one of the claims 1 to 11.

16. Storage medium with a machine-readable program code according to claim 15 stored thereon.

## Revendications

1. Procédé destiné au fonctionnement d'un laminoir (2) avec au moins une cage réversible (4) destinée au laminage d'un produit à laminer (14) ainsi que des fours de bobinage (10) disposés côté entrée et côté sortie de la cage réversible (4) pour le produit à laminer (14), **caractérisé en ce que**
- lors d'une étape 1 (S1) lors du laminage du produit à laminer (14) dans la zone de l'extrémité de tête du produit à laminer (14) une épaisseur cible d_{ziel} du produit à laminer (14) est laissée de côté, une continuité de force prédéfinie permettant d'ajuster un réglage de force, et
- lors d'une étape 2 (S2) pendant l'exécution de l'étape 1 au moins une grandeur de mesure qui est corrélée avec une épaisseur effective dᵢₛₜ et/ou une dureté du produit à laminer (14) est déterminée et comparée avec une valeur théorique, et
- lors d'une étape 3 (S3) lorsque la grandeur de mesure déterminée atteint la valeur théorique ou passe en dessous, la cage réversible est mise en fonctionnement dans l'optique d'atteindre l'épaisseur cible d_{ziel} du produit à laminer (14), lorsque l'épaisseur déterminée dᵢₛₜ est inférieure ou égale à une épaisseur théorique dₛₒₗₗ, un passage du réglage de force à un réglage d'épaisseur de la cage réversible 4 étant effectué.

2. Procédé selon la revendication 1,
**caractérisé en ce que** la continuité de force prédéfinie comprend une force F constante qui représente entre 5 MN et 100 MN, en particulier entre 5 MN et 60 MN.

3. Procédé selon la revendication 1,
**caractérisé en ce que** lors de l'étape 1 la cage réversible est ajustée à un réglage de force auquel une force théorique est déterminée pour la cage réversible (4) à partir de l'au moins une grandeur de mesure déterminée.

4. Procédé selon l'une des revendications précédentes,
**caractérisé en ce qu'**une longueur minimale attendue Lₘᵢₙ d'une partie froide du produit à laminer (14) est prédéfinie et lors du laminage d'une section du produit à laminer (14) dans la zone de la longueur minimale Lₘᵢₙ seule l'étape 1 est exécutée.

5. Procédé selon l'une des revendications précédentes,
**caractérisé en ce qu'**une longueur maximale attendue Lₘₐₓ de la partie froide du produit à laminer (14) est définie, une zone de transition (18) se trouvant entre la longueur minimale Lₘᵢₙ et la longueur maximale Lₘₐₓ, l'étape 2 et l'étape 3 n'étant exécutées que lors du laminage de la section du produit à laminer (14) dans la zone de transition (18).

6. Procédé selon la revendication 5,
**caractérisé en ce que**, après le passage de la longueur maximale Lₘₐₓ à travers la cage réversible (4), un passage est effectué automatiquement à un réglage à l'épaisseur cible d_{ziel}.

7. Procédé selon l'une des revendications précédentes,
**caractérisé en ce que** l'épaisseur effective dᵢₛₜ de la section laminée du produit à laminer (14) est calculée par le biais d'une force de laminage mesurée F et par le biais de l'emploi mesuré d'un calibre plat (7) de la cage réversible (4).

8. Procédé selon l'une des revendications précédentes,
**caractérisé en ce que** pour le laminage d'une partie froide au pied du produit à laminer (14) la cage réversible (4) passe du réglage à l'épaisseur cible d_{ziel} à un réglage dans lequel l'épaisseur d_{ziel} est laissée de côté.

9. Procédé selon l'une des revendications 4 à 8,
**caractérisé en ce que** la longueur minimale Lₘᵢₙ est comprise entre 0 m et 5 m.

10. Procédé selon l'une des revendications 5 à 9,
**caractérisé en ce que** la longueur maximale Lₘₐₓ représente environ 10 m.

11. Procédé selon l'une des revendications 5 à 10,
**caractérisé en ce que** la longueur maximale Lₘₐₓ correspond à l'espacement entre la cage réversible (14) et un des fours de bobinage (10).

12. Procédé selon l'une des revendications précédentes,
**caractérisé en ce que** les étapes 1 à 3 sont initiées au moment d'une perturbation lors d'un processus de laminage pendant le réglage de la cage réversible (14) à l'épaisseur cible d_{ziel}.

13. Dispositif de commande et/ou de réglage (9) pour un laminoir (2), avec un code de programme lisible par une machine, lequel code présente des instructions de commande qui, lors de la réalisation du code de programme, amènent le dispositif de commande et/ou de réglage (9) à exécuter un procédé selon l'une des revendications 1 à 12.

14. Laminoir (2) avec au moins une cage réversible (4) pour le laminage d'un produit à laminer (14) ainsi que des fours de bobinage (10) disposés côté entrée et côté sortie de la cage réversible (4) pour le produit à laminer (14) ainsi qu'avec un dispositif de commande et/ou de réglage (9) selon la revendication 13.

15. Code de programme lisible par une machine pour un dispositif de commande et/ou de réglage (9) pour un laminoir (2), le code de programme présentant des instructions de commande qui amènent le dispositif de commande et/ou de réglage (9) à exécuter le procédé selon l'une des revendications 1 à 11.

16. Support de stockage avec un code de programme lisible par une machine selon la revendication 15 stocké dessus.
